## Europäisches Patentamt
## European Patent Office
## Office européen des brevets

(19)

(11) Veröffentlichungsnummer: **0 084 110**
**A1**

(12) # EUROPÄISCHE PATENTANMELDUNG

(21) Anmeldenummer: **82111219.0**

(22) Anmeldetag: **03.12.82**

(51) Int. Cl.³: **G 01 N 29/04**
**G 01 N 29/00**

(30) Priorität: **22.12.81 DE 3150739**

(43) Veröffentlichungstag der Anmeldung:
**27.07.83 Patentblatt 83/30**

(84) Benannte Vertragsstaaten:
**FR GB IT NL**

(71) Anmelder: **Messerschmitt-Bölkow-Blohm Gesellschaft mit beschränkter Haftung München**
**Robert-Koch-Strasse**
**D-8012 Ottobrunn(DE)**

(72) Erfinder: **Bilgram, Rudolf, Dipl.-Ing. Dr.**
**Hohenbrunner Strasse 132**
**D-8028 Taufkirchen(DE)**

(72) Erfinder: **Zimmermann, Werner, Dipl.-Phys.**
**Putzbrunner Strasse 78**
**D-8000 München 83(DE)**

(54) Ultraschall-Prüfverfahren und -Prüfkopfanordnung.

(57) Zur Ultraschallprüfung von Kleb-oder Haftverbindungen (108) an oder zwischen Blechplatten (104, 106) werden größenmäßig abgegrenzte Prüffelder (A) mit in Richtung der Flächenerstreckung der Platten (104, 106) in diesen laufenden Platten-oder Zick-zack-Wellen nach der Durchschallungs- und vorzugsweise auch gleichzeitig nach der Pulsechomethode geprüft und die ermittelten Durchschallungs- und Echolotamplituden gemeinsam bei der endgültigen Qualitätsbewertung der Kleb-bzw. Haftschicht (108) berücksichtigt. Die Prüfkopfanordnung (102) enthält einen besonderen Vorlaufkörper (110) mit einem als Schallfalle wirkenden Distanzteil (112), der das Prüffeld (A) berührungsfrei überbrückt und die Kontaktflächen (124, 126) des Vorlaufkörpers (110) in einem festen gegenseitigen Abstand starr miteinander verbindet.

FIG. 2

MESSERSCHMITT BÖLKOW BLOHM
      GESELLSCHAFT
MIT BESCHRÄNKTER HAFTUNG
      MÜNCHEN

_ 1 _

0084110

Ottobrunn, den 17.12.1981
BTO 1 Im/w.

9142

## Ultraschall-Prüfverfahren und -Prüfkopfanordnung

Die Erfindung bezieht sich auf Verfahren zur zerstörungsfreien Ultraschall-Prüfung sowie auf eine Prüfkopfanordnung zur Durchführung des erfindungsgemäßen Verfahrens.

Zum Nachweis von Fehlerstellen, etwa Rissen oder Lunkern, in schalleitenden Platten und vor allem Walzblechen ist es bekannt, durch eine unter einem bestimmten Winkel auf die Plattenoberfläche eingeschallte Raumwelle eine in der Platte in Plattenlängsrichtung laufende, sog. Platten-oder Lambwelle anzuregen und diese entweder nach der Pulsechomethode, die die Amplitude der von der Fehlerstelle zurücklaufenden Reflexionswelle anzeigt und eine Aussage auch über die Lage des Fehlers bezüglich des Einschallortes der Raumwelle ermöglicht, oder aber nach der Durchschallungsmethode zu messen, welche die Schallschwächung des Plattenwellenimpulses längs einer fest vorgegebenen Wegstrecke und somit eine integrale Fehleranzeige ergibt und bei der die Platten-bzw. Blechqualität umso höher bewertet wird, je größer die auf die Sendeamplitude bezogene Durchschallungsamplitude der Plattenwelle ist. Diese bekannten Plattenwellen-Prüfmethoden, mit denen auf an sich sehr vorteilhafte und einfache Weise große Prüffelder von der Oberseite des Prüflings aus auf Fehlerstellen untersucht werden können, sind jedoch auf die Überprüfung von schalleitenden Platten beschränkt, bei Kleb-oder Haftschichten hingegen ist wegen deren starker Schallschwächungseigenschaften die Anregung von Plattenwellen über größere Prüffelder nicht möglich.

Derartige Kleb-oder Haftschichten, wie sie etwa im Flugzeugbau zur Verbindung gedoppelter Bleche an Rumpfschalen oder dgl.Verwendung finden,müssen daher auf herkömmliche Weise im Wege der üblichen

Senkrecht-Durchstrahlung mit Ultraschall-Raumwellen, die die Platten und die Haft-oder Klebeschicht in Querrichtung durchlaufen, auf Adhäsions-oder Kohäsionsfehler überprüft werden, was wegen der geringen Prüffeldgröße eine sehr umständliche Prüfmethode und zumeist auch dann nur praktikabel ist, wenn die Rückseite des unteren Bleches zum Anbringen eines Empfänger-Prüfkopfes oder einer Schall-Reflexionsschicht frei zugänglich ist.

Der Erfindung liegt die Aufgabe zugrunde, ein Ultraschall-Prüfverfahren für Haft-oder Klebverbindungen von Blechen und Platten zu entwickeln, das weitgehend frei von Störeinflüssen in einfacher, rascher Weise mit einem einzigen Prüfvorgang eine differenzierte Qualitätsbewertung auch größerer, abgegrenzter Haft-oder Klebschichtzonen gestattet, und zwar auch dann, wenn das Prüffeld nur von einer Seite aus zugänglich ist.

Gelöst wird diese Aufgabe erfindungsgemäß durch das im Anspruch 1 gekennzeichnete Verfahren.

Ausgehend von der Überlegung, daß zwischen Adhäsions-oder Kohäsionsfehlern einer auf einer oder zwischen zwei Platten vorhandenen Haft-oder Klebschicht und der Schallschwächung einer in der oder den Platten angeregten Plattenwelle ein Wirkzusammenhang der_art besteht, daß die Plattenwelle umso stärker bedämpft wird, je besser die Haftschicht-oder Klebungsqualität ist, werden erfindungsgemäß auch größere, freie Prüffelder, deren Länge allerdings unabhängig vom Ort der Messung fest vorgegeben ist, im Wege der Einfach-Durchschallung mit Plattenwellen geprüft, deren Durchschallungsamplitude vor allem deswegen ein zuverlässiger Indikator für den Gütegrad der Haft-oder Klebschicht ist, weil das Messergebnis von äußeren, nicht qualitätsbezogenen Parametern, die die Höhe der Durchschallungsamplitude ebenfalls beeinflussen, z.B. die Stärke eines Kantenechos und/oder unterschiedlich lange Ultraschall-Laufstrecken, freigehalten wird. Das erfindungsgemäße Verfahren ist ebenso einfach durchzuführen wie die eingangs erwähnte Plattenwellen-Prüfung auf Fehlerstellen in der Platte selbst und hinsichtlich der Bewertungssicherheit mit der wesentlich zeitraubenderen und umständlicheren Raumwellen-Senkrechtdurchstrahlung von Haft-oder Klebschichten vergleichbar.

Eine besonders zweckmäßige, selbständig schutzfähige Lösung der gestellten Aufgabe wird erfindungsgemäß durch das im Anspruch 2 gekennzeichnete Verfahren erreicht. Nach diesem Verfahren wird die obengeschilderte Haft-oder Klebschicht-Prüfmethode mit der eingangs erwähnten Puls-Echo-Methode in der Weise kombiniert, daß von einem zur Haft-oder Klebschicht-Prüfung erzeugten Plattenwellenimpuls nicht nur die Durchschallungs-sondern gleichzeitig auch die Echelotamplitude ermittelt und ausgewertet wird. Dies ermöglicht eine verfeinerte Qualitätsbeurteilung der Haft-oder Klebschicht, wenn nicht auszuschließen ist, daß sich in der oder den Platten selbst Fehlerstellen befinden, die zusätzlich zur Klebungs-oder Haftqualität auf die Durchschallungsamplitude der Plattenwelle von Einfluß sind. Erfindungsgemäß werden derartige Plattenfehler anhand der Echolotamplitude erkannt und in die Auswertung der Durchschallungsamplitude einbezogen,d.h. die Durchschallungsamplitude wird zunächst unter Berücksichtigung der Echolotamplitude des Plattenwellenimpulses modifiziert, bevor sie zur Qualitätsanzeige der Klebe-bzw. Haftschicht benutzt wird, so daß eine von Riss-oder sonstigen Fehlerstellen in der Platte selbst weitgehend unverfälschte Bewertung der Haftschicht-oder Klebungsqualität erhalten wird.

Bei gemeinsamer Bildschirmanzeige der Echolot-und der Durch-schallungsamplitude empfiehlt sich gemäß Anspruch 3 eine repetierende Messung unter Verschiebung der Prüfkopfanordnung, wodurch erreicht wird, daß die Empfangsamplitude des Echolotimpulses aufgrund der sich ändernden Laufzeit auf der Zeitachse des Bildschirmes wandert, während die Durchschallungsamplitude wegen der konstanten Laufstrecke auf der Zeitachse des Bildschirmes stehen bleibt, so daß eine einfache und eindeutige Unterscheidung zwischen der Durchschallungs-und der Echolotamplitude möglich ist.

Bei den geschilderten Prüfverfahren wird davon ausgegangen, daß die Plattenwelle von der unbeschichteten Plattenseite aus angeregt wird. Es ist jedoch auch denkbar, etwa bei der Haftungsprüfung von Lackschichten auf Blechen, daß von der lackierten

Blechseite aus eingeschaltet werden muß. In diesem Fall wird die Prüfkopfankoppelung durch eine Delamination im Schallein-oder-austrittsbereich empfindlich gestört, so daß in der Platte keine oder nur eine sehr schwache Plattenwelle angeregt und/oder eine wesentlich zu kleine Durchschallungsamplitude gemessen wird. Wenn daher die Schallein-oder die Schallaustrittsfläche auf der beschichteten Plattenseite angeordnet wird, wird in Ergänzung zur Amplitudenbewertung gemäß Anspruch 1 in weiterer vorteilhafter Ausgestaltung der Erfindung eine Durchschallungsamplitude, die deutlich niedriger als ein an einer qualitativ hochwertigen Klebe-oder Haftschicht ermittelter Vergleichswert liegt, gemäß Anspruch 4 ebenfalls als Anzeige einer verminderten Klebung bzw. Haftung, nämlich in diesem Fall als Delamination im Bereich der Schallein-bzw.-austrittsfläche, gewertet.

Eine zur Durchführung der geschilderten Prüfverfahren besonders zweckmäßige Prüfkopfanordnung ist in den Ansprüchen 5 und 6 gekennzeichnet. Mit dieser Prüfkopfanordnung, bei der die beiden Schallübertragungsteile jeweils eine Vorlaufstrecke bilden und über den Distanzteil starr miteinander verbunden sind, wird in einfacher Weise eine exakte Einschallung und Amplitudenmessung über bezüglich der Größe, des gegenseitigen Abstands und des Einschallwinkels genau definierte Schallein-und-austrittsbereiche garantiert und aufgrund der berührungsfreien Überbrückung des Prüffeldes eine das Prüfergebnis verfälschende, durch den Distanzteil verursachte Fremddämpfung verhindert, wobei in besonders bevorzugter Weise gemäß Anspruch 6 durch die Einschnitte im Distanzteil Störsignale, verursacht durch unerwünschte Schallreflexionen oder Schallbrücken im Vorlaufkörper, ausgeschaltet werden.

Die Erfindung wird nunmehr anhand mehrerer Ausführungsbeispiele in Verbindung mit den Zeichnungen näher erläutert. Es zeigt:

Fig. 1 Die schematische Ansicht einer Prüfkopfanordnung zur Prüfung einer zwischen zwei Blechen angeordneten Klebeschicht;

Fig. 2 Eine der Figur 1 ähnliche, schematische Darstellung einer Tandem-Prüfkopfanordnung für eine kombinierte Durchschallungs-und Pulsechoprüfung;

Fig. 3 Eine ebenfalls für die kombinierte Durchschallungs- und Pulsechomethode geeignete Prüfkopfanordnung, jedoch mit einem einzigen Prüfkopf, in gleichfalls schematischer Darstellung;

Fign. 4 a-d vereinfachte Bildschirmanzeigen, wie sie von einer Prüfkopfanordnung gemäß Fig. 2 oder 3 erhalten werden.

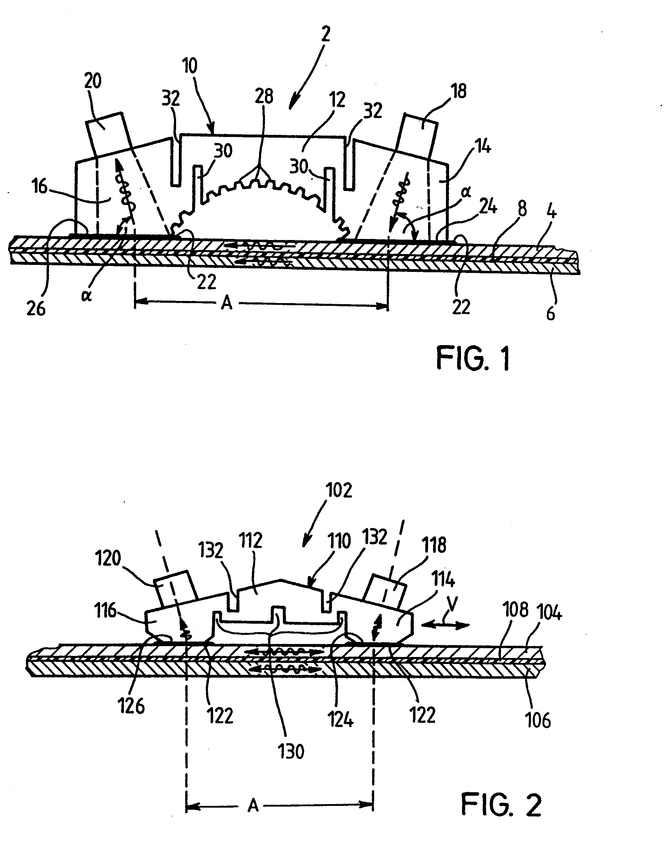

Die in Fig. 1 gezeigte Prüfkopfanordnung 2 dient zur zerstörungsfreien Qualitätsprüfung einer zwischen einem Doppelblech 4,6 vorhandenen Klebschicht 8 und enthält einen Vorlaufkörper 10, der aus zwei über einen Distanzteil 12 starr miteinander verbundenen Schallübertragungsteilen 14,16 besteht, von denen der eine einen als Sendeprüfkopf ausgebildeten, ersten Ultraschallschwinger 18 und der andere einen als Empfangsprüfkopf ausgebildeten, zweiten Ultraschallschwinger 20 trägt. Beide Schallübertragungsteile 14,16 sind jeweils mit einer an die unbeschichtete Außenfläche der oberen Blechplatte 4 über ein Kontaktmittel, etwa einen Ölfilm 22, ankoppelbaren Kontaktfläche 24 bzw. 26 versehen und unter dem zur Anregung bzw. Rückumwandlung von Plattenwellen durch bzw. in Ultraschall-Raumwellen erforderlichen Winkel $\alpha$ gegensinnig schräg geneigt ausgebildet. Das von den Kontaktflächen 24, 26 begrenzte Prüffeld A wird durch den Distanzteil 12 berührungsfrei überbrückt, und dieser ist mit Einschnitten 28, 30, 32 versehen, die als Schallfallen wirken. Auf diese Weise werden das Prüfergebnis verfälschende Störsignale unterdrückt und verhindert, daß der Distanzteil 12 eine Schallbrücke zwischen den jeweils als Vorlaufstrecke wirkenden Schallübertragungsteilen 14, 16 bildet oder unerwünschte Schallreflexionen auftreten.

Zur zerstörungsfreien Qualitätsprüfung der Klebschicht 8 längs des Prüffeldes A wird am Sender 18 eine Ultraschall-Raumwelle diskreter Frequenz erzeugt, die den Schallübertragungsteil 14 durchläuft und über die Kontaktfläche 24 und das Ankoppelungsmedium 22 unter dem Winkel $\alpha$ auf die Außenseite der oberen Blechplatte 4 eingeschallt wird, wo sie eine in Richtung der Flächenerstreckung des Doppelbleches 4,6 laufende Plattenwelle anregt, die am Schallübertragungsteil 16 wiederum in eine Ultraschall-Raumwelle umgewandelt wird, deren Empfangsamplitude vom Schallschwinger 20 gemessen und dann auf einem Bildschirm angezeigt wird.

Bei qualitativ hochwertiger Klebung wird die im oberen Blech 4 angeregte Plattenwelle durch die Klebschicht 8 stark gedämpft, wobei ein Teil der Schallenergie in das untere Blech 6 gelangt, wie dies in Fig. 1 durch die im oberen und unteren Blech 4,6 laufenden Wellenzüge angedeutet ist, und wechselweise zwischen oberem und unterem Blech 4,6 jeweils unter Schallschwächung beim Durchgang durch die Klebschicht 8 ausgetauscht wird. Bei Adhäsions- oder Kohäsionsfehlern nimmt der längs des Prüffeldes A von der Klebschicht 8 absorbierte Schallenergieanteil je nach dem Ausmaß der Fehlerstellen ab und dementsprechend höher liegt die am Ultraschallschwinger 20 ermittelte Durchschallungsamplitude. Diese liefert also einen über den für jede Messung konstanten Laufweg der Plattenwelle integralen Meßwert, der eine differenzierte Aussage über die Klebungsqualität in der Weise zuläßt, daß sich eine Verminderung der Klebfestigkeit bzw. eine beginnende Delamination in Richtung einer deutlichen Zunahme der Durchschallungsamplitude auswirkt. Die Meßwertanzeige wird anhand zweier Referenzmessungen ausgewertet, die zuvor an zwei unterschiedlichen Proben, nämlich einer solchen mit einer qualitativ hochwertigen Klebung einerseits und einem einfachen, unverklebten Blech andererseits durchgeführt wurden, wobei der Referenzmeßwert am einfachen Blech einer vollständigen Delamination der Klebschicht 8 vom Blech 4 entspricht.

Bei einem praktischen Ausführungsbeispiel wurde als unterer Referenzmeßwert, also an einem Doppelblech mit guter Klebung, entsprechend der relativ niedrigen Durchschallungsamplitude eine Verstärkung von 66 dB gemessen, bei der die Durchschallungsamplitude auf 2/5 Bildschirmhöhe gebracht wurde. Der entsprechende obere Referenz -meßwert an der einfachen Blechplatte betrug 36 dB. Aus dem großen Unterschied von etwa 30 dB ist die sehr hohe Empfindlichkeit des Prüfverfahrens zu erkennen. Aus dem Abstand der jeweils gemessenen Durchschallungsamplitude vom oberen und unteren Referenzmeßwert läßt sich für wandstärken-und materialgleiche, verklebte Doppelbleche auch bei größeren Prüffeldern unmittelbar eine zuverlässige, differenzierte Bewertung der Klebungsqualität treffen, vorausgesetzt, daß in den Blechen selbst keine Fehlerstellen vorhanden sind, wobei die hohe Bewertungszuverlässigkeit darauf beruht, daß die Messung frei von Störfaktoren und unabhängig von äußeren Randbedingungen, die sich von Messung zu Messung ändern können, wie etwa die Stärke eines Kantenechos oder verschieden lange Ultraschall-Laufstrecken, arbeitet.

Ein verfeinertes Prüfverfahren, bei dem auch Fehlerstellen in den Blechen selbst detektiert und bei der Qualitätsbeurteilung der Kleb-oder Haftschicht berücksichtigt werden, wird anhand der Fig. 2 - 4 erläutert, in denen die der Fig. 1 entsprechenden Teile durch das gleiche, jedoch um 100 bzw. 200 erhöhte Bezugszeichen gekennzeichnet sind. Die Prüfkopfanordnung 102 gemäß Fig. 2 unterscheidet sich von der in Fig. 1 gezeigten im wesentlichen dadurch, daß der Prüfkopf 118 als kombinierter Sende-und Empfangsprüfkopf ausgebildet ist und daher von einem vom Prüfkopf 118 ausgesandten Wellenimpuls nicht nur -nach Durchlaufen des Übertragungsteiles 114, des Prüffeldes A und des Übertragungsteiles 116- die Durchschallungsamplitude am Prüfkopf 120 sondern auch die Amplitude des von eventuell im Doppelblech 104, 106 vorhandenen Rissen oder ähnlichen Fehlerstellen zurück zum Prüfkopf 118 reflektierten Echolots gemessen wird, wie dies in Fig.2 durch die Doppelpfeile der im oberen und unteren Blech 104, 106 laufenden Wellenzüge angedeutet ist, wobei die Laufzeit des Echolotimpulses mit wachsendem Abstand der Riss-oder Fehlerstelle von der Kontaktfläche 124 zunimmt, während die Laufzeit des Durchschallungsimpulses -ebenso wie bei der Ausführungsform gemäß Fig. 1- konstant ist, auch wenn die Prüfkopfanordnung 102 auf der Blechplatte 104 verschoben wird.
Mit der Prüfkopfanordnung 102, deren Bauweise im übrigen
der gemäß Fig. 1 entspricht, werden das Doppelblech 104, 106
und die Klebung 108 nach dem bevorzugten, aus Durchschallungs-
und Pulsechomethode kombinierten Verfahren geprüft:

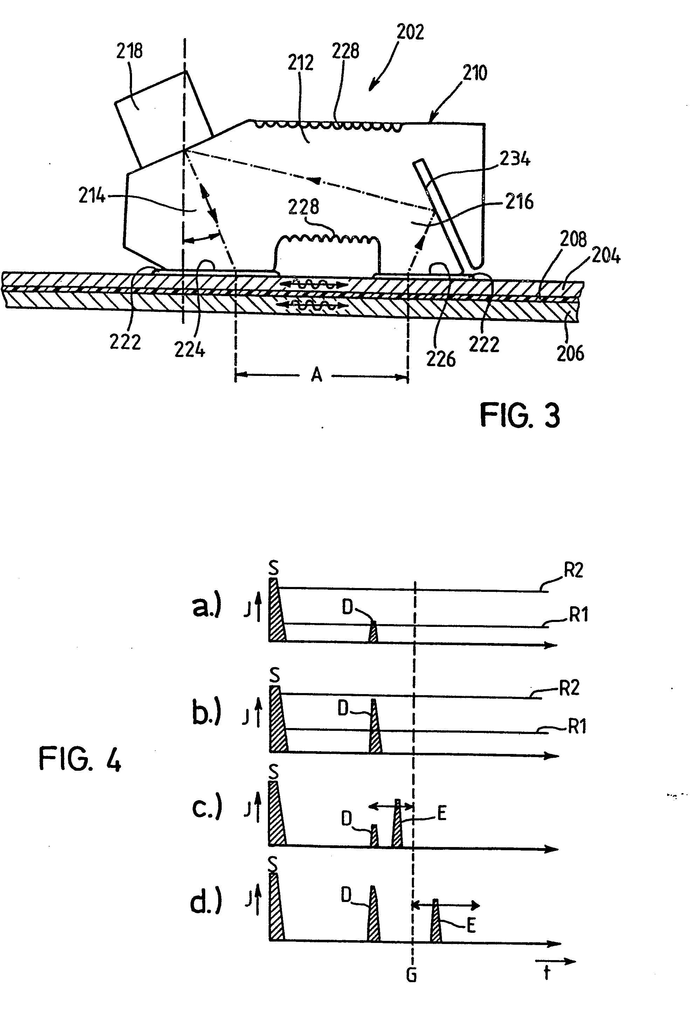

Solange im Bereich der Prüfkopfanordnung 102 keine Risse oder
dgl. in den Blechen 104, 106 vorhanden sind, also am Prüfkopf
118 kein Echolotimpuls empfangen wird, wird das Prüfverfahren
auf die anhand der Fig. 1 erläuterte Weise durchgeführt. Demgemäß wird die Amplitude des Durchschallungsimpulses D, die auf
der Laufzeitachse t der Bildschirmanzeige gemäß Fig. 4 in einem
festen, auch bei einer Verschiebung der Prüfkopfanordnung 102
auf dem Blech 104 unveränderten Abstand hinter dem Sendeimpuls S
erscheint, im Verhältnis zu den erwähnten unteren und oberen
Referenzmeßwerten R 1 und R 2 unmittelbar zur Qualitätsbewertung der Klebeschicht 108 benutzt, d.h. eine Durchschallungsamplitude, die am unteren Referenzmeßwert R 1 liegt (Fig. 4a)
wird als Indikator für eine qualitativ hochwertige Klebung bewertet, während eine Durchschallungsamplitude D am oberen Referenzmeßwert R 2 (Fig. 4 b) eine weitgehende Delamination
oder starke Kohäsionsfehler der Klebschicht 108 im Bereich des
Prüffeldes A anzeigt.

Sind hingegen im Schallbereich der Prüfkopfanordnung 102 Risse
oder ähnliche Fehlerstellen im Blech vorhanden, so wird zusätzlich zum Durchschallungsimpuls D am Prüfkopf 120 auch ein Echolotimpuls E am Prüfkopf 118 empfangen (Fign. c, d), der bei
gemeinsamer Bildschirmanzeige in einfacher Weise dadurch vom
Durchschallungsimpuls D unterschieden wird, daß die Prüfkopfanordnung 102 bei repetierender Sendeimpulsgabe des Prüfkopfes
118 langsam in Richtung V (Fig.2) auf dem Blech 104 verschoben
wird. Dementsprechend wandert die Echolotanzeige E wegen der
sich dabei ändernden Laufstrecke des Echolots auf der Zeitachse t
der Bildschirmanzeige, während die Durchschallungsamplitude D
nach wie vor stehen bleibt. Liegt die Fehlerstelle im Blech
noch innerhalb des durch die Kontaktflächen 124, 126 begrenzten Prüffeldes A , so läßt die in Fig. 4 c dargestellte Bildschirmanzeige zunächst noch keine eindeutige Bewertung der Klebungsqualität zu, denn die niedrige Durchschallungsamplitude D kann ebenso gut durch die Fehlerstelle im Blech wie durch die hohe Klebungsqualität verursacht sein. Die Prüfkopfanordnung 102 wird nun aber soweit verschoben, bis der Blechfehler außerhalb des Prüffeldes A liegt, d.h. auf der Bildschirmanzeige bis zu einer vorgegebenen Laufzeitgrenze G kein sich in Richtung t bewegender, also laufzeitabhängiger Impuls mehr erscheint. Eine solche Bildschirmanzeige, bei der der Echolotimpuls E außerhalb der Laufzeitgrenze G liegt (Fig. 4 d), gestattet nunmehr eine endgültige Bewertung der Klebungsqualität. So ist aus der Anzeige gemäß Fig. 4 d einerseits eine Fehlerstelle im Blech aus der Echolotamplitude E und andererseits aus der hohen Durchschallungsamplitude D eine schlechte Klebungsqualität (starke Delamination und/oder Kohäsionsfehler) der innerhalb des Prüffeldes A liegenden Klebschichtzone erkennbar und ersichtlich, daß die niedrige Durchschallungsamplitude D bei der Bildschirmanzeige gemäß Fig. 4 c tatsächlich durch den innerhalb des Prüffeldes A liegenden Blechfehler verursacht war.

Dieses kombinierte Durchschallungs-und Pulsechoverfahren läßt sich in gleicher Weise auch mit der in Fig. 3 gezeigten Prüfkopfanordnung 202 durchführen, deren bauliche Besonderheit darin besteht, daß sie nur einen einzigen Prüfkopf 218 mit kombinierter Sende-und Empfangsfunktion enthält, welcher zusätzlich zu dem Echolotimpuls E auch den nach Durchlaufen des Prüffeldes A an einem Reflexionsschlitz 234 im Übertragungsteil 216 des Vorlaufkörpers 210 reflektierten und über den Distanzteil 212 zum Prüfkopf 218 zurücklaufenden Durchschallungsimpuls D mißt . In diesem Fall gestattet also der Distanzteil 112 eine gerichtete Schallübertragung vom Reflexionsschlitz 234 zum Prüfkopf 218 längs der in Fig. 3 strich-punktiert eingezeichneten Linie, ist ansonsten aber ebenfalls mit Einschnitten 228 zur Unterdrückung von Störechos versehen. Im übrigen sind die Bauweise der Prüfkopfanordnung 202 und das Prüfverfahren die gleichen wie bei dem Ausführungsbeispiel gemäß Fig. 2.

Abschließend sei daraufhingewiesen, daß sich das geschilderte Prüfverfahren auch von der beschichteten Blech-bzw. Plattenseite aus durchführen läßt, also etwa bei einem lackierten Blech die Prüfkopfanordnung auch auf die Lackoberfläche aufgesetzt werden kann. In diesem Fall ist nur zusätzlich zu beachten, daß eine Delamination zwischen Blech- und Lackschicht im Bereich einer der Kontaktflächen 24, 26 die Anregung und/oder Amplitudenmessung einer Plattenwelle empfindlich stört. Daher ist nicht nur eine hohe Durchschallungsamplitude ein Nachweis für eine Delamination der Lackschicht, sondern auch eine Durchschallungsamplitude, die deutlich niedriger als der untere, an einer Probe mit gut haftender Lackschicht ermittelte Referenzwert (R 1 gem. Fig. 4) liegt, ist ein Indikator für Ablöseerscheinungen im Bereich der Vorlaufkörper-Kontaktflächen. Anstatt unmittelbar in Kontakttechnik kann die Ankoppelung der Kontaktflächen auch in Tauchtechnik erfolgen oder die Prüfung sogar berührungsfrei mit als elektrodynamische Wandler ausgebildeten Prüfköpfen durchgeführt werden.

Die geschilderten Prüfverfahren und Prüfkopfanordnungen lassen sich außerdem in gleicher Weise und ebenso gut auch für Klebverbindungen an oder zwischen Blechplatten verwenden,bei denen eine Anregung von Plattenwellen etwa wegen einer zu großen Wandstärke nicht möglich ist. In diesem Fall entspricht dann die gemessene Durchschallungsamplitude dem die Durchschallungsstrecke zick-zack-förmig zwischen der Klebschicht und der Oberseite der Blechplatte durchlaufenden Anteil der in die Blechplatte selbst, d.h. ohne Umwandlung in eine Plattenwelle, vom Sendeprüfkopf schräg eingestrahlten Raumwelle, die Prüfverfahren und -anordnungen einschließlich der Auswertung der Meßergebnisse bleiben jedoch unverändert.

0084110

MESSERSCHMITT BÖLKOW BLOHM
GESELLSCHAFT
MIT BESCHRÄNKTER HAFTUNG
MÜNCHEN

Ottobrunn, den 17.12.1981
BTO 1 Im/w.

9142

Ultraschall-Prüfverfahren und -Prüfkopfanordnung

P a t e n t a n s p r ü c h e

1. Verfahren zur zerstörungsfreien Prüfung einer auf die
Oberfläche einer schalleitenden Platte, insbesondere
eines Bleches, aufgebrachten Kleb-oder Haftschicht mit
Hilfe von Ultraschallwellen, dadurch g e k e n n z e i c h-
n e t , daß die Platte in Richtung ihrer Flächenerstreckung
längs eines größenmäßig fest abgegrenzten Prüffeldes mit
einer Platten-oder Zick-zack-Welle durchschallt und eine,
bezogen auf die Sende-, hohe Durchschallungsamplitude der
Platten-oder Zick-zack-Welle zum Nachweis einer verminderten
Klebungs-bzw. Haftqualität benutzt wird.

2. Verfahren insbesondere nach Anspruch 1, zur zerstörungsfreien Prüfung von schalleitenden, auf der Oberfläche mit
einer Kleb-oder Haftschicht versehenen Platten, insbesondere
Blechen, mit Hilfe von Ultraschallwellen, dadurch g e k e n n-
z e i c h n e t , daß die Platten jeweils gleichzeitig sowohl
nach der Durchschallungs-als auch nach der Pulsechomethode mit
in Richtung ihrer Flächenerstreckung laufenden Platten-oder
Zick-zack-Wellen-Impulsen geprüft und die Echolot-und Durchschallungsamplituden voneinander getrennt und zum Nachweis und
zur Unterscheidung von Fehlerstellen der Platte einerseits und
einer verminderten Klebungs-bzw. Haftqualität andererseits benutzt werden.

3. Verfahren nach Anspruch 2, dadurch g e k e n n z e i c h -
n e t , daß bei gemeinsamer Bildschirmanzeige zur Trennung
von Echolot-und Durchschallungsamplitude die Messung an
mehreren, in Richtung des Prüffeldes zueinander versetzten
Plattenabschnitten wiederholt wird.

4. Verfahren nach Anspruch 2 oder 3 , dadurch g e k e n n -
z e i c h n e t , daß bei einer Prüfkopfankoppelung auf der
beschichteten Plattenseite eine gegenüber einem an einer
qualitativ hochwertigen Haft-oder Klebeschicht ermittelten
Referenzmeßwert deutlich erniedrigte Durchschallungsamplitude
bei zugleich innerhalb der durch die Prüffeldlänge vorgegebenen
Laufzeit ausbleibender Echolotamplitude als Anzeige einer Delamination in der Schallein-oder-austrittsfläche bewertet wird.

5. Prüfkopfanordnung zur Durchführung des Verfahrens nach einem
der vorhergehenden Ansprüche, mit einem mindestens einen Prüfkopf tragenden Vorlaufkörper, dadurch g e k e n n z e i c h -
n e t , daß der Vorlaufkörper (10, 110, 210) aus zwei gegensinnig unter dem zur Anregung einer Plattenwelle erforderlichen
Einschallwinkel ($\alpha$) schräg geneigten, jeweils eine Vorlaufstrecke bildenden und mit einer an die Außenfläche der zu
prüfenden Platte (4, 104, 204) ankoppelbaren Kontaktfläche
(24, 26, 124, 126, 224, 226) versehenen Schallübertragungsteilen (14, 16, 114, 116, 214, 216) und einem das Prüffeld(A)
berührungsfrei überbrückenden, die Schallübertragungsteile
mit festem gegenseitigen Abstand verbindenden Distanzteil (12,
112, 212) besteht.

6. Prüfkopfanordnung nach Anspruch 5, dadurch g e k e n n -
z e i c h n e t , daß der Distanzteil (12, 112, 212) mit als
Schallfallen wirkenden Einschnitten (28, 30, 32, 130, 132, 228)
versehen ist.

FIG. 1

FIG. 2

FIG. 3

FIG. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | KRAUTKRÄMER et al. "Werkstoffprüfung mit Ultraschall", 4. Auflage, 1980, Springer Verlag, Berlin, Heidelberg, New York, Seiten 512-521 <br> * Seite 512, letzter Absatz - Seite 513, zweiter Absatz ; Seite 515, letzter Absatz - Seite 517, erster Absatz ; Figur 27.4c, d * | 1 | G 01 N 29/04 <br> G 01 N 29/00 |
| Y | DE-A-2 257 385 (W. SIMMET) <br> * Anspruch 1 ; Figuren 1-3 * | 5,6 | |
| Y | DE-A-1 801 182 (SALZGITTER HÜTTENWERKE AG) <br> * Anspruch 1 ; Figur 1 * | 5,6 | |
| A | FR-A-2 285 611 (STE NATIONALE DES POUDRES ET EXPLOSIFS) <br> * Ansprüche 1, 5 ; Figur 4 * | 1,5 | RECHERCHIERTE SACHGEBIETE (Int. Cl. ³) <br><br> G 01 N 29/00 |
| A | Soviet Inventions Illustrated Week D27, 12. August 1981, Sektion S03 & SU-A-771540 | 1 | |
| A | US-A-3 512 400 (L.C. LYNNWORTH) <br> * Anspruch 1 ; Spalte 1, Zeilen 12-21 ; Figuren 3-6 * | 1,5 | |

-/-

Der vorliegende Recherchenbericht wurde für alle Patentansprüche erstellt.

| Recherchenort <br> BERLIN | Abschlußdatum der Recherche <br> 18-03-1983 | Prüfer <br> HOFMANN D G |
|---|---|---|

**Europäisches Patentamt**

## EUROPÄISCHER RECHERCHENBERICHT

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 813 926 (A.W. STUBBEMAN) <br> * Anspruch 1 ; Zusammenfassung ; Figuren 1, 2 * <br><br> ----- | 1 | |
| | | | RECHERCHIERTE SACHGEBIETE (Int. Cl. ³) |

Der vorliegende Recherchenbericht wurde für alle Patentansprüche erstellt.

| Recherchenort <br> BERLIN | Abschlußdatum der Recherche <br> 18-03-1983 | Prüfer <br> HOFMANN D G |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82